(19) **Europäisches Patentamt / European Patent Office / Office européen des brevets**

(11) **EP 2 715 615 B1**

(12) **FASCICULE DE BREVET EUROPEEN**

(45) Date de publication et mention
de la délivrance du brevet:
**18.03.2015 Bulletin 2015/12**

(21) Numéro de dépôt: **12722430.1**

(22) Date de dépôt: **18.04.2012**

(51) Int Cl.:
*H04B 1/38* *(2015.01)*     *G06K 19/07* *(2006.01)*

(86) Numéro de dépôt international:
**PCT/FR2012/050843**

(87) Numéro de publication internationale:
**WO 2012/164179 (06.12.2012 Gazette 2012/49)**

(54) **AIDE AU POSITIONNEMENT D'UN TRANSPONDEUR**

TRANSPONDERPOSITIONIERHILFE

TRANSPONDER POSITIONING ASSISTANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2011 FR 1154862**

(43) Date de publication de la demande:
**09.04.2014 Bulletin 2014/15**

(73) Titulaire: **ST Microelectronics (Rousset) SAS 13790 Rousset (FR)**

(72) Inventeur: **WUIDART, Luc**
**F-83910 Pourrieres (FR)**

(74) Mandataire: **Thibon, Laurent**
**Cabinet Beaumont**
**1, rue Champollion**
**38000 Grenoble (FR)**

(56) Documents cités:
**EP-A1- 1 045 325     EP-A1- 2 267 643**
**EP-A1- 2 267 644**

**Description**

<u>Domaine de l'invention</u>

La présente invention concerne de façon générale les systèmes utilisant des transpondeurs, c'est-à-dire des émetteurs-récepteurs (généralement mobiles) susceptibles de communiquer sans contact et sans fil avec un terminal.

<u>Exposé de l'art antérieur</u>

Des systèmes à transpondeur électromagnétique sont de plus en plus utilisés avec l'apparition des dispositifs mobiles de télécommunication équipés de routeurs de communication en champ proche (NFC - Near Field Communication). Dans ces dispositifs, l'équipement mobile peut servir à la fois de lecteur de transpondeur, par exemple de lecteur de carte à puce sans contact, et à l'inverse de transpondeur lui-même pour communiquer en champ proche avec un terminal, par exemple un autre dispositif mobile, une borne d'accès, etc.

Une difficulté récurrente dans l'utilisation des transpondeurs électromagnétiques est, pour la qualité de la communication, la distance séparant le transpondeur du lecteur. En particulier, un réflexe naturel du porteur du transpondeur (par exemple de la carte à puce sans contact) est de presser la carte contre la surface du lecteur. Cette pression peut même aller parfois jusqu'à plier la carte. Il en découle des contraintes mécaniques sur la carte à puce qui sont susceptibles d'endommager l'antenne généralement constituée d'un enroulement conducteur noyé dans la carte, ou d'endommager les contacts entre l'antenne et la puce.

De plus, la position imposée au transpondeur n'est souvent pas optimale au fonctionnement du système.

Le document EP 2 267 643 décrit un procédé d'évaluation résistive du facteur de couplage d'un transpondeur électromagnétique.

Le document EP 2 267 644 décrit un procédé de gestion d'énergie dans un transpondeur électromagnétique.

<u>Résumé de l'invention</u>

Il serait souhaitable de disposer de moyens pour éviter qu'un utilisateur ne soumette un transpondeur à des contraintes mécaniques inutiles.

Il serait par ailleurs souhaitable d'optimiser la communication entre un transpondeur (qu'il s'agisse d'une carte à puce ou d'un dispositif mobile équipé d'un routeur NFC fonctionnant en transpondeur) et un terminal.

Pour atteindre tout ou partie de ces objets ainsi que d'autres, on prévoit un procédé d'assistance au positionnement d'un transpondeur électromagnétique vis-à-vis d'un terminal par un utilisateur, selon la revendication 1.

Selon un mode de réalisation de la présente invention, lesdites valeurs de tension correspondent à une tension continue fournie par un redresseur aux bornes d'un circuit oscillant du transpondeur.

Selon un mode de réalisation de la présente invention, les seuils sont choisis en fonction de paramètres de fonctionnement autour de la position de couplage optimum dans laquelle on considère que la communication entre le transpondeur et le terminal est optimale.

Selon un mode de réalisation de la présente invention, lorsque ladite valeur courante est comprise entre les deux seuils, le transpondeur signale à l'utilisateur de ne plus modifier la distance avec le terminal.

Selon un mode de réalisation de la présente invention, on compare successivement ladite valeur courante aux deux seuils pour définir si l'utilisateur doit augmenter ou réduire la distance entre le terminal et le transpondeur.

On prévoit un transpondeur électromagnétique comportant des moyens adaptés à la mise en oeuvre du procédé ci-dessus.

On prévoit également un téléphone mobile comportant un transpondeur.

<u>Brève description des dessins</u>

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente, de façon très schématique, un exemple de système de communication en champ proche ;
la figure 2 est un schéma bloc simplifié d'un terminal et d'un transpondeur d'un système de communication en champ proche ;
la figure 3 illustre un exemple d'évolution de la tension aux bornes du circuit résonant du transpondeur en fonction d'un couplage normalisé ;
les figures 4A, 4B et 4C illustrent un mode de réalisation du procédé d'assistance à la communication entre un transpondeur et un lecteur ;

la figure 5 est un schéma bloc illustrant un mode de mise en oeuvre du procédé d'assistance à la communication ; et la figure 6 est un schéma bloc d'un mode de réalisation d'un transpondeur adapté à évaluer son facteur de couplage avec un terminal.

Description détaillée

De mêmes éléments ont été désignés par de mêmes références aux différentes figures. Pour des raisons de clarté, seuls les étapes et éléments utiles à la compréhension des modes de réalisation décrits ont été représentés et seront détaillés. En particulier, la provenance et la destination des données transmises lors des communications entre un transpondeur et un terminal n'ont pas été détaillées, les modes de réalisation décrits étant compatibles avec toute communication usuelle.

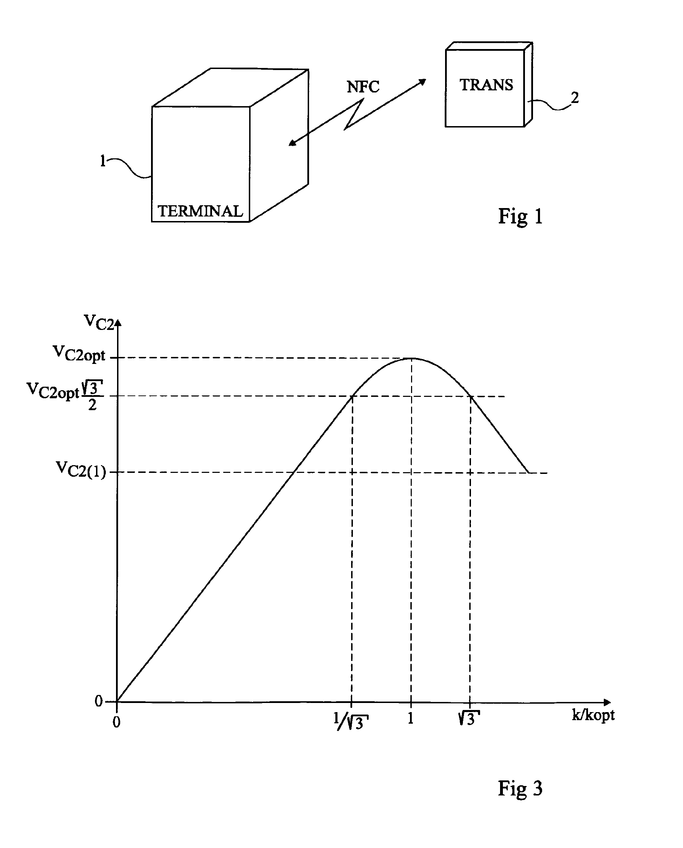

La figure 1 est un schéma bloc d'un système de communication à transpondeur électromagnétique. Un terminal 1 (TERMINAL) est susceptible de communiquer en champ proche (par exemple selon un protocole NFC, Near Field Communication) avec un élément distant, à savoir un transpondeur 2 (TRANS).

Le terminal peut prendre différentes formes, par exemple une borne de validation de titres de transport, un lecteur de passeports électronique, un ordinateur portable, un dispositif mobile de communication (téléphone GSM, assistant numérique personnel - PDA, etc.), un boîtier électronique de démarrage de véhicule automobile, etc.

Le transpondeur peut également prendre différentes formes, par exemple, une carte à puce, un titre de transport électronique, un passeport électronique, un terminal de télécommunication (téléphone mobile ou smartphone, PDA, etc.), une étiquette électronique, etc.

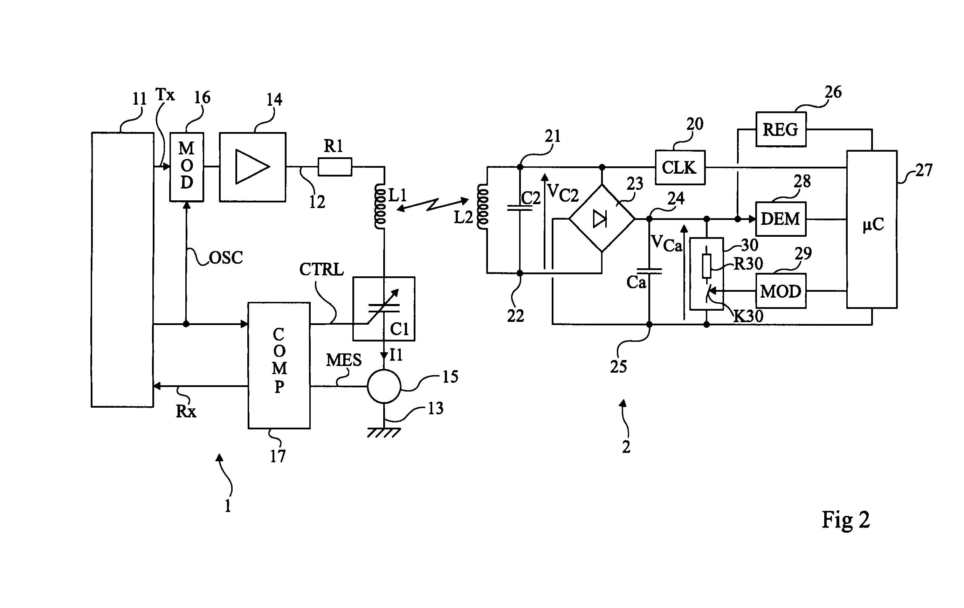

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit, si besoin, un signal Tx provenant d'un circuit 11 de commande et d'exploitation des transmissions. Ce circuit 11 est généralement pourvu d'un microprocesseur de traitement de commandes et de données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique ou à une batterie (par exemple, celle d'un véhicule automobile ou d'un téléphone ou ordinateur portable). Le modulateur 16 fournit une porteuse haute fréquence (par exemple, à 13,56 MHz) au circuit oscillant L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne L1 en relation de phase constante avec le signal de référence. Ce signal de référence correspond, par exemple, au signal OSC fourni au modulateur 16. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant, détectée par l'élément de mesure 15 (par exemple un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter un champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternative d'un pont redresseur 23 (le plus souvent double alternance). Les bornes de sortie redressées du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur μC) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur 2, le circuit 16 module (généralement en amplitude) la porteuse (signal OSC) en fonction du signal Tx. Côté transpondeur, ces données sont démodulées par le démodulateur 28 à partir de la tension $V_{Ca}$ aux bornes du condensateur Ca. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28 et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est choisi suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, une fréquence de la porteuse de téléalimentation de 13,56 MHz et une fréquence de rétromodulation de 847,5 kHz) utilisées pour transmettre des données du transpondeur vers le terminal.

Un exemple de terminal à régulation de phase est décrit dans le document EP-A-0 857 981. Le fait que la phase soit régulée côté terminal permet d'exploiter des mesures de courant et de tension dans le circuit oscillant du transpondeur pour en déduire des informations relatives au couplage du transpondeur lorsqu'il est dans le champ d'un terminal.

Ces informations prennent en compte, notamment, le couplage entre le transpondeur et le terminal, c'est-à-dire le coefficient de couplage entre le circuit oscillant du terminal et celui du transpondeur. Ce coefficient de couplage dépend essentiellement de la distance séparant le transpondeur du terminal. Le coefficient de couplage, noté k, entre les circuits oscillants d'un transpondeur et d'un terminal est toujours compris entre 0 et 1. Quand le transpondeur est posé contre le terminal, on considère que l'on est dans une position de couplage maximal. On ne peut en effet plus rapprocher davantage les antennes du transpondeur et du terminal sauf à supprimer le boîtier du terminal.

Dans les modes de réalisation qui vont être décrits, on utilise différentes relations liant les grandeurs électriques mesurables par le transpondeur dans différentes configurations de fonctionnement avec un terminal pour assister l'utilisateur dans le positionnement du transpondeur par rapport au terminal.

Il est désormais connu qu'il existe entre le terminal et le transpondeur une position de couplage optimum $k_{opt}$ qui correspond à la position à laquelle la tension $V_{C2}$, récupérée aux bornes du transpondeur (plus précisément de son antenne), est maximale. Cette position de couplage optimum ne correspond pas nécessairement à la position de couplage maximal.

La figure 3 représente un exemple d'allure de la tension $V_{C2}$ récupérée côté transpondeur en fonction du couplage normalisé $k/k_{opt}$.

La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour un coefficient de couplage $k_{opt}$ optimum ($k/k_{opt} = 1$), puis décroît vers une valeur intermédiaire $V_{C2}(1)$ atteinte au couplage 1. La position de couplage maximal se trouve à un endroit donné de cette courbe mais pas nécessairement à la position de couplage optimum. Cela dépend en particulier des différentes valeurs des éléments capacitifs et résistifs.

Deux autres points remarquables de la figure 3 sont des points d'inflexion, où le rapport $k/k_{opt}$ vaut respecti-

vement $1/\sqrt{3}$ et $\sqrt{3}$, et où la tension $V_{C2}$ a la même valeur $\left(V_{C2opt} \cdot \dfrac{\sqrt{3}}{2}\right)$ côté transpondeur.

Des relations exprimant la valeur de la tension $V_{C2}$ en fonction du rapport du couplage courant sur le couplage optimum et reliant la valeur de la résistance équivalente à la charge constituée par les éléments du transpondeur sur son propre circuit oscillant sont désormais habituelles. On note généralement R2 cette résistance équivalente. La résistance R2 représente la résistance équivalente de tous les circuits (microprocesseur, moyen de rétromodulation, etc.) du transpondeur 2 ramenée en parallèle sur le condensateur C2 et l'inductance L2 (avant ou après le pont redresseur). On appelle également "charge résistive" la conductance apportée par les circuits du transpondeur, donc leur consommation. Le niveau de cette charge est symbolisé par la résistance R2 aux bornes du circuit oscillant.

Des relations liant ces grandeurs relatives au couplage et à différentes valeurs prises par la résistance R2 sont données, par exemple dans le document EP-A-2 267 643 (B9617-09-RO-119).

On prévoit d'exploiter ces relations pour assister l'utilisateur ayant en main le transpondeur à le placer à une distance optimale par rapport au terminal ou lecteur pour optimiser la communication.

Pour une valeur de couplage k donnée, en considérant que l'impédance du circuit oscillant du terminal ne varie pas et que les circuits restent accordés, on peut exprimer (par exemple, en exploitant les relations indiquées dans le document susmentionné) le rapport entre les coefficients courants k et les coefficients optimum $k_{opt]R20}$ et $k_{opt]R21}$, respectivement pour une résistance R2 de valeur R20 et de valeur R21 donne :

$$\frac{\dfrac{k}{k_{opt]R20}}}{\dfrac{k}{k_{opt]R21}}} = \sqrt{\frac{R20}{R21}} \ . \qquad \text{(formule 1)}$$

Toujours dans les mêmes conditions, le carré du rapport, noté r, entre le coefficient courant k et le coefficient optimum $k_{opt]R20}$, en fonction des tensions $V_{C2]R20}$ et $V_{C2]R21}$ de la tension $V_{C2}$, respectivement pour les valeurs R20 et R21 de la résistance R2, peut s'écrire :

$$r^2 = \left(\frac{k}{k_{opt]R20}}\right)^2 = \frac{\dfrac{V_{C2]R21}}{V_{C2]R20}} \cdot \dfrac{R20}{R21} - 1}{1 - \dfrac{V_{C2]R21}}{V_{C2]R20}}} \qquad \text{(formule 2)}$$

Lorsque le couplage est optimum avec la résistance R21 ($k = k_{opt]R21}$), on peut donc également écrire :

$$r^2 = \left(\frac{k}{k_{opt]R20}}\right)^2 = \frac{R20}{R21} \qquad \text{(formule 3)}$$

Ces relations permettent, en faisant varier la valeur de la résistance R2, d'indiquer au porteur du transpondeur une distance optimale par rapport au terminal ou lecteur.

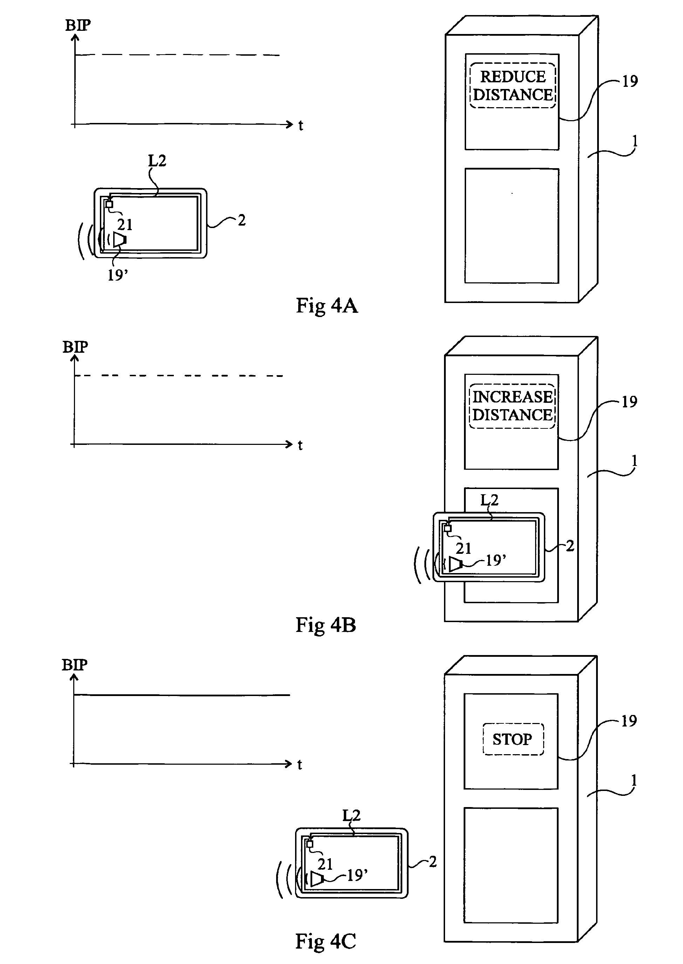

Les figures 4A, 4B et 4C illustrent, par des représentations schématiques de positions relatives d'un terminal 1 et d'un transpondeur 2, un mode de mise en oeuvre du procédé d'assistance au positionnement pour optimiser les communications.

On suppose que le terminal 1 est un dispositif mobile de télécommunication de type téléphone mobile et que le transpondeur 2 est une carte à puce. Tout ce qui va être décrit s'applique toutefois également au cas où le transpondeur est un terminal de télécommunication équipé d'un routeur NFC et où le terminal 1 est un autre dispositif mobile fonctionnant en mode lecteur ou est une borne fixe, etc. On notera que, lorsqu'on désigne un rapprochement ou un écartement du transpondeur du terminal, cela peut correspondre à écarter ou rapprocher un terminal du transpondeur, par exemple, dans le cas de transpondeur fixe (transpondeur intégré à des affiches ou analogue).

Selon ce mode de réalisation, on exploite l'information relative du couplage courant k par rapport au couplage optimum avec deux valeurs R20 et R21 de la résistance R2 pour déterminer si le transpondeur a besoin d'être rapproché ou écarté du terminal.

L'exemple de la figure 4A correspond à une position dans laquelle le transpondeur 2 doit être rapproché du terminal 1. Le transpondeur 2 est équipé, par exemple d'un haut-parleur 19' qui émet alors un signal sonore (BIP). On prévoit, par exemple, une première fréquence du signal sonore ou un premier train d'impulsions sonores.

La mise en oeuvre des modes de réalisation décrits requiert que le transpondeur (l'élément du système jouant le rôle de transpondeur) soit équipé d'un moyen d'avertissement visuel ou sonore. Par exemple, si le dispositif mobile de type téléphone jouant le rôle de terminal 1 aux figures 4A à 4C se met à servir de transpondeur, on pourra utiliser son écran 19 pour afficher un message (REDUCE DISTANCE) comme l'illustre le pointillé en figure 4A.

La figure 4B illustre le cas où le transpondeur doit être écarté du terminal (par exemple, le cas où il serait posé sur le terminal et où la position de couplage optimum ne correspondrait pas à ce couplage maximal). Dans ce cas, le haut-parleur 19' du transpondeur émet un signal sonore à une autre fréquence ou un train d'impulsions sonores (BIPS) à une autre fréquence que dans le cas de la figure 4A. Dans la variante illustrée par un pointillé où le téléphone portable serait le transpondeur, son écran 19 affiche un message différent de celui de la figure 4A (par exemple, un message requérant une augmentation de distance) (INCREASE DISTANCE).

La figure 4C illustre le cas où le transpondeur est dans une position de couplage optimal par rapport au terminal 1. Dans ce cas, le haut-parleur 19' émet un signal sonore encore différent (par exemple, un signal sonore continu ou à une fréquence différente des deux cas précédent). Dans la variante illustrée en pointillés où le téléphone joue le rôle de transpondeur, son afficheur 19 indique à l'utilisateur (par exemple par un message de type STOP) que la position optimale est atteinte et qu'il convient de ne plus bouger.

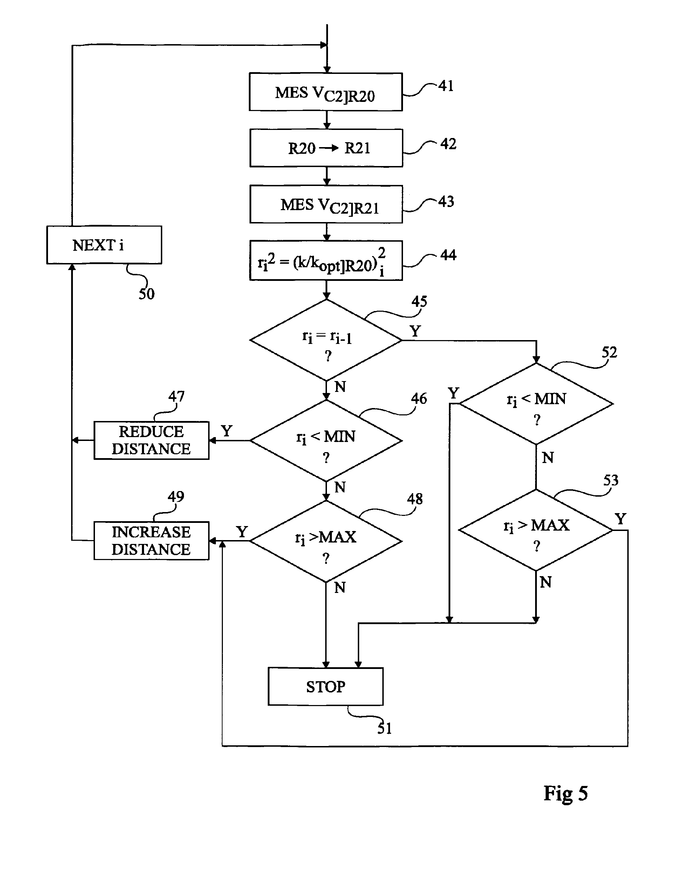

La figure 5 est un organigramme illustrant un mode de mise en oeuvre du procédé d'assistance au positionnement du transpondeur.

Pour simplifier l'exposé de la figure 5, on continue à se référer aux valeurs $V_{C2]R20}$ et $V_{C2]R21}$, sachant qu'il est en pratique plus facile de mesurer les valeurs $V_{Ca]R20}$ et $V_{Ca]R21}$ de la tension $V_{Ca}$ mais que cela ne change rien sur les seuils de comparaison du rapport du couplage sur le couplage optimum à une valeur donnée de la résistance.

On commence (bloc 41, MES $V_{C2]R20}$) par mesurer et mémoriser la tension aux bornes du condensateur C2 avec une première valeur R20 de la résistance R2.

Puis (bloc 42, R20 -> R21) on modifie la valeur de l'élément résistif R2 vers une valeur supérieure R21. En variante, on diminue la valeur de la résistance R2 vers une valeur R2 inférieure.

Puis (bloc 43, MES $V_{C2]R21}$), on mesure la tension $V_{C2}$ avec la valeur de la résistance R21 que l'on mémorise.

On calcule et on mémorise alors (bloc 44, $r_i^2 = (k/k_{opt]R20})_i^2$, la valeur courante du rapport du couplage k par rapport à la valeur optimum avec la résistance R20, le tout élevé au carré. Ce calcul est effectué, par exemple, d'après la formule 2 ci-dessus.

On compare alors (bloc 45, $r_i = r_{i-1}$ ?) le rapport courant par rapport au rapport $r_{i-1}$ calculé à l'itération précédente (i-1). Ce test revient à déterminer si la distance entre le transpondeur et le terminal varie. On notera qu'on peut également comparer directement les carrés des rapports.

Si la distance varie (sortie N du bloc 45), c'est-à-dire que l'utilisateur bouge l'un des deux éléments par rapport à l'autre, on détermine si le rapport $r_i$ est compris dans une plage acceptable définie par deux seuils MIN et MAX, c'est-à-dire autour du couplage optimum avec une tolérance acceptable. Pour cela, on commence, par exemple, par déterminer si le rapport $r_i$ est inférieur au seuil inférieur MIN (bloc 46, $r_i$ < MIN ?). Dans l'affirmative (sortie Y du bloc 46), cela signifie qu'il faut rapprocher les deux éléments (bloc 47, REDUCE DISTANCE). Dans la négative (sortie N du bloc 46), on compare la valeur courante $r_i$ par rapport au seuil maximal (bloc 48, $r_i$ > MAX ?). Si le seuil supérieur MAX est dépassé (sortie Y du bloc 48), cela signifie que le transpondeur doit être écarté du terminal (bloc 49, INCREASE DISTANCE) dans la mesure où on a dépassé le point de couplage optimum.

Dans les deux cas, on effectue ensuite une mesure ultérieure (on passe à une itération suivante) pour vérifier si l'utilisateur a bien pris en compte la consigne (bloc 50, NEXTi).

Si le transpondeur est dans la plage de distance acceptable (sortie N du bloc 48), on affiche ou on indique à l'utilisateur que cette position est correcte et qu'il n'a plus à bouger (bloc 51, STOP).

Si le transpondeur ne bouge plus par rapport au terminal (sortie Y du bloc 45), on examine sa position par rapport au couplage optimum. Par exemple, on commence par regarder s'il est trop éloigné (bloc 52, $r_i$ < MIN ?). Dans l'affirmative (sortie Y du bloc 52), cela signifie que bien que le transpondeur ait été collé sur le terminal, la position de couplage optimum ne peut pas être atteinte en le rapprochant encore plus, généralement à cause du boîtier du terminal. On demande alors à l'utilisateur de s'arrêter (bloc 51).

Si la position d'absence de mouvement correspond à une position supérieure au minimum (sortie N du bloc 52), on vérifie (bloc 53, $r_i$ > MAX ?) si le rapport $r_i$ est supérieur à la valeur maximale. Dans l'affirmative (sortie Y du bloc 53), on indique à l'utilisateur qu'il faut qu'il éloigne le transpondeur du terminal (bloc 49). Dans la négative, on lui indique de ne plus bouger (bloc 51) dans la mesure où la position courante est alors comprise dans la plage acceptable.

En variante, les tests 52 et 53 sont omis et on passe directement au bloc 51 en sortie affirmative (Y) du test 45.

Le choix des seuils MIN et MAX dépend de l'application et est généralement effectué pour conférer une hystérésis, évitant au système d'indication de varier en permanence. En effet, on aurait pu penser comparer le seuil directement par rapport au couplage optimum. Toutefois, cela conduirait en pratique, en raison du fait que l'objet est porté par un utilisateur et donc sensible au déplacement de sa main, à un système instable.

Les seuils peuvent être générés par exemple par des ponts diviseurs résistifs ou sont précalculés et stockés dans une mémoire non-volatile du transpondeur pour une comparaison numérique.

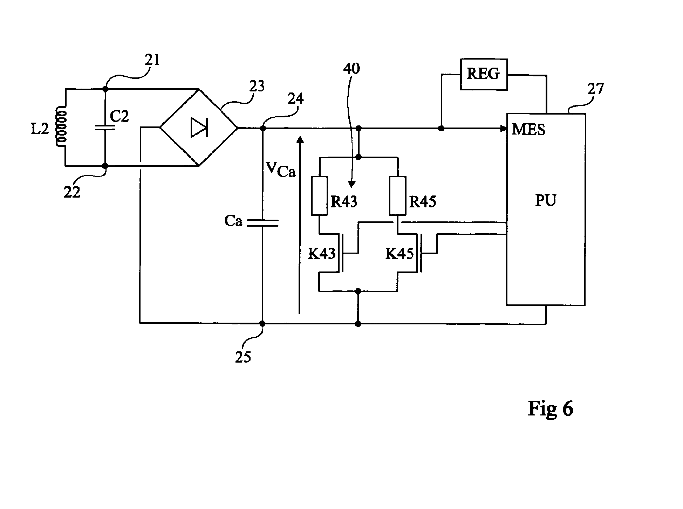

La figure 6 est un schéma bloc d'un mode de réalisation d'un transpondeur 2, équipé pour déterminer automatiquement, lorsqu'il est dans le champ d'un terminal (non représenté), le rapport entre le couplage courant par rapport au couplage optimum. La représentation de la figure 6 est simplifiée par rapport à celle de la figure 2. En particulier, les éléments de démodulation, de rétromodulation et d'obtention de la fréquence d'horloge n'ont pas été illustrés.

La figure 6 illustre la présence d'un circuit résistif commutable 40 entre les bornes 24 et 25 du pont redresseur 3. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés comme on le verra par la suite en relation avec la figure 6 pour mettre en oeuvre le procédé d'assistance au positionnement du transpondeur. L'unité de traitement 27 reçoit une information sur la tension $V_{Ca}$ sur une entrée MES pour mettre en oeuvre ce procédé. Dans l'exemple de la figure 6, lorsque les deux résistances R43 et R45 sont fonctionnellement connectées, la résistance R2 (charge des circuits du transpondeur) représente la valeur R20. La déconnexion d'une des résistances (par exemple la résistance R43) augmente la valeur de la résistance R2 vers la valeur R21. D'autres connexions et commutations peuvent être prévues. Par exemple, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. On effectue une première mesure en commutant la résistance de rétromodulation pour qu'elle soit fonctionnellement dans le circuit (interrupteur 40) à l'état passant dans l'exemple de la figure 2. On mesure alors la tension $V_{C2]R20}$. Puis, on ouvre l'interrupteur K30 et on mesure la tension $V_{C2]R21}$ comme cela a été décrit en relation avec la figure 5. La mise en oeuvre du procédé décrit ne requiert alors aucune modification structurelle d'un transpondeur équipé d'un microcontrôleur. Il suffit de programmer ce microcontrôleur pour qu'il commute ainsi la résistance de rétromodulation.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitements par l'unité 27. On peut également provoquer une augmentation de la résistance équivalente R2 en réduisant la consommation de l'unité 27 en interrompant certains calculs.

Divers modes de réalisation ont été décrits, diverses variantes et modifications apparaîtront à l'homme de l'art. En particulier, le choix des seuils acceptables pour le rapport $r_i$ et de la périodicité des mesures et itérations sont à la portée de l'homme du métier en fonction de l'application. De plus, les relations d'inégalité pourront correspondre à des inégalités strictes ou larges. En outre, d'autres moyens indicateurs que des indicateurs sonores et visuels pourront être utilisés. Par exemple, on pourra prévoir un système faisant vibrer le transpondeur dans le cas où celui-ci est un dispositif mobile de télécommunication équipé d'un routeur NFC et cesser la vibration lorsque la position atteinte est correcte ou, à l'inverse, le faire vibrer une fois que cette position atteinte est correcte.

Par ailleurs, la mise en oeuvre pratique des modes de réalisation décrits est à la portée de l'homme du métier à partir des indications fonctionnelles données ci-dessus et en utilisant des outils matériels et logiciels habituellement présents dans les systèmes à transpondeur. On notera que la mise en oeuvre de ces modes de réalisation ne requiert aucune modification du terminal et ne s'effectue que côté transpondeur.

**Revendications**

1. Procédé d'assistance au positionnement d'un transpondeur électromagnétique (2) vis-à-vis d'un terminal (1) par un utilisateur, comprenant les étapes de :

   mesurer (41) une première valeur ($V_{C2]R20}$) de tension aux bornes d'un circuit oscillant (L2, C2) du transpondeur pour une première valeur (R20) de charge résistive (R2) de ce circuit oscillant ;
   mesurer (43) une seconde valeur ($V_{C2]R21}$) de ladite tension pour une seconde différente valeur (R21) de charge résistive ;
   calculer et mémoriser (44), à partir des première et seconde valeurs de la tension, une valeur courante ($r_i$) d'un rapport entre i) le facteur de couplage courant (k) entre le transpondeur et le terminal et ii) un facteur de couplage optimum ($k_{opt]R20}$) avec la première valeur de charge résistive (R2) ;

comparer (45) ladite valeur courante ($r_i$) à une valeur précédente ($r_{i-1}$) de ce rapport, mémorisée lors d'une itération précédente ;

comparer (46,48) ladite valeur courante ($r_i$) à deux seuils pour définir si l'utilisateur doit augmenter (49) ou réduire (47) la distance entre le terminal et le transpondeur ; et

commander des éléments d'information (19') à destination de l'utilisateur en fonction des résultat des comparaisons.

2. Procédé selon la revendication 1, dans lequel lesdites valeurs de tension correspondent à une tension continue fournie par un redresseur (23) aux bornes du circuit oscillant (L2, C2) du transpondeur.

3. Procédé selon la revendication 1 ou 2, dans lequel les seuils (MIN, NJAX) sont choisis en fonction de paramètres de fonctionnement autour de la position de couplage optimum dans laquelle on considère que la communication entre le transpondeur et le terminal est optimale.

4. Procédé selon l'une quelconque des revendications 1 à 3, dans lequel lorsque ladite valeur courante est comprise entre les deux seuils (MIN, MAX), le transpondeur (2) signale à l'utilisateur de ne plus modifier la distance avec le terminal (1).

5. Procédé selon l'une quelconque des revendications 1 à 4, dans lequel on compare successivement ladite valeur courante aux deux seuils pour définir si l'utilisateur doit augmenter (49) ou réduire (47) la distance entre le terminal et le transpondeur.

6. Transpondeur électromagnétique comportant des moyens adaptés à la mise en oeuvre, par le transpondeur du procédé conforme à l'une quelconque des revendications précédentes.

7. Téléphone mobile comportant un transpondeur conforme à la revendication 6.

**Patentansprüche**

1. Ein Verfahren zur Unterstützung bei der Positionierung eines elektromagnetischen Transponders (2) durch einen Benutzer bezüglich eines Anschlusses (1), wobei die folgenden Schritte vorgesehen sind:

Messen (41) eines ersten Spannungswertes ($V_{C2]R20}$) an einer Oszillationsschaltung (L2, C2) des Transponders für einen ersten Wert (R20) der Widerstandslast (R2) der erwähnten Oszillationsschaltung;
Messen (43) eines zweiten Werts ($V_{C2]R20}$) der erwähnten Spannung für einen unterschiedlichen zweiten Wert (R21) der Widerstandslast;
Berechnen und Speichern (44) von den ersten und zweiten Spannungswerten einen laufenden Wert ($r_i$) eines Verhältnisses zwischen i) dem laufenden Kopplungsfaktor (k) zwischen dem Transponder und dem Anschluss und ii) einem optimalen Kopplungsfaktor ($k_{opt]R20}$) mit dem ersten Widerstandslastwert (R2);
Vergleichen (45) des erwähnten laufenden Werts ($r_i$) mit einem vorhergehenden Wert ($r_{i-1}$) dieses Verhältnisses, gespeichert in einer vorherigen Iteration;
Vergleichen (46, 48) des laufenden Werts ($r_i$) mit den Schwellen zur Definition, ob der Benutzer den Abstand zwischen dem Anschluss und dem Transponder vergrößern (49) oder verkleinern (47) muss; und
Steuern von Datenelementen (19') vorgesehen für den Benutzer gemäß den Ergebnissen der erwähnten Vergleiche.

2. Das Verfahren nach Anspruch 1, wobei die erwähnten Spannungswerte einer Gleichspannung entsprechen vorgesehen durch einen Gleichrichter (23) an der Oszillationsschaltung (L2, C2) des Transponders.

3. Das Verfahren nach Anspruch 1 oder 2, wobei die Schwellen (MIN, MAX) gemäß Betriebsparametern um die optimale Kupplungsposition herum, in der die Kommunikation zwischen Transponder und dem Anschluss als optimal betrachtet wird, ausgewählt sind.

4. Das Verfahren nach einem der Ansprüche 1 bis 3, wobei dann, wenn der laufende Wert zwischen den zwei Schwellen (MIN, MAX) liegt, der Transponder (2) den Benutzer informiert, nicht länger den Abstand zum Anschluss (1) zu modifizieren.

**5.** Das Verfahren nach einem der Ansprüche 1 bis 4, wobei der laufende Wert aufeinanderfolgend mit den zwei Schwellen verglichen wird, um zu definieren, ob der Benutzer den Abstand zwischen dem Anschluss und dem Transponder vergrößern (49) oder vermindern (47) muss.

**6.** Ein elektromagnetischer Transponder, der Mittel aufweist, die in der Lage sind, das Verfahren irgendeines der vorhergehenden Ansprüche zu implementieren.

**7.** Ein Mobiltelefon, welches den Transponder nach Anspruch 6 aufweist.

**Claims**

**1.** A method for assisting with the positioning of an electromagnetic transponder (2) by a user with respect to a terminal (1), comprising the steps of:

measuring (41) a first voltage value ($U_{C2]R20}$) across an oscillating circuit (L2, C2) of the transponder for a first value (R20) of resistive load (R2) of said oscillating circuit;
measuring (43) a second value ($U_{C2]R20}$) of said voltage for a different second value (R21) of resistive load;
calculating and storing (44), from the first and second voltage values, a current value ($r_i$) of a ratio between i) the current coupling factor (k) between the transponder and the terminal and ii) an optimum coupling factor ($k_{opt]R20}$) with the first resistive load value (R2);
comparing (45) said current value ($r_i$) with a previous value ($r_{i-1}$) of this ratio, stored in a previous iteration;
comparing (46, 48) said current value ($r_i$) with the thresholds to define whether the user must increase (49) or decrease (47) the distance between the terminal and the transponder; and
controlling data elements (19') intended for the user according to the results of said comparisons.

**2.** The method of claim 1, wherein said voltage values correspond to a D.C. voltage provided by a rectifier (23) across the oscillating circuit (L2, C2) of the transponder.

**3.** The method of claim 1 or 2, wherein the thresholds (MIN, MAX) are selected according to operating parameters around the optimum coupling position in which the communication between the transponder and the terminal is considered to be optimal.

**4.** The method of any of claims 1 to 3, wherein, when said current value is between the two thresholds (MIN, MAX), the transponder (2) notifies the user to no longer modify the distance to the terminal (1).

**5.** The method of any of claims 1 to 4, wherein said current value is successively compared with the two thresholds to define whether the user must increase (49) or decrease (47) the distance between the terminal and the transponder.

**6.** An electromagnetic transponder comprising means capable of implementing the method of any of the foregoing claims.

**7.** A cell phone comprising the transponder of claim 6.

Fig 1

Fig 3

Fig 2

Fig 4A

Fig 4B

Fig 4C

**Fig 5**

**Fig 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2267643 A
- EP 2267644 A

- EP 0857981 A